# DEMANDE DE BREVET EUROPEEN

(11) **EP 3 680 531 A1**
(43) Date de publication de la demande: **15.07.2020**
(21) Numéro de dépôt: 19151556.8
(22) Date de dépôt: 14.01.2019
(51) Int. Cl.: F16L 3/10, F16L 3/223, F16L 3/237

(54) **SUPPORT ARTICULE DE SERRAGE D'AU MOINS UN ARTICLE TUBULAIRE**

(71) Demandeur: Autotube AB, 432 15 Varberg (SE)
(72) Inventeur: OLOFSSON, Jan, 43238 Valberg (SE); LOFGREN, Cecilia, 43295 Varberg (SE)

(57) **Abrégé**

Le support (12) pour au moins un article tubulaire comprend des membres séparables inférieurs (100) et supérieurs (200) qui sont de forme complémentaire pour définir au moins un logement de serrage cylindrique (20, 30) destiné à recevoir l'article tubulaire et une charnière (40) reliant de manière pivotante les membres (100, 200) pour un mouvement rotatif relatif. Plus précisément, les membres inférieur (100) et supérieur (200) sont constitués respectivement de parties articulées inférieure (110) et supérieure (210) munies chacune d'un siège (120, 220) définissant respectivement un espace de réception sensiblement semi-cylindrique et formant respectivement des éléments d'articulation inférieure (42) et supérieure (44) de la charnière (40), formant ainsi un ensemble pivotant rotatif avec l'article tubulaire dans la position de montage du support de serrage dans laquelle les deux membres séparables (100, 200) sont articulés en rotation autour de l'élément tubulaire.

## Description

### Domaine technique.

L'invention concerne un support de serrage articulé pour tenir au moins un article tubulaire par exemple une conduite à travers laquelle circule un fluide, telle qu'une conduite d'un système de carburant, de freinage, de refroidissement ou similaire dans une automobile ou similaire. Plus particulièrement, l'invention concerne un support de serrage qui comprend deux membres articulés capables d'entourer et de retenir un ou plusieurs tubes.

Plus précisément, l'invention concerne un support de serrage composé de membres inférieur et supérieur qui comportent respectivement des parties semi-cylindriques de forme complémentaire inférieure et supérieure formées sur des faces intérieures en regard l'une de l'autre.

Afin de faciliter le positionnement du (des) tube (s) dans le support de serrage, il est connu de relier les deux membres du support de montage par une charnière à extension axiale. De cette façon, le tube est positionné dans la partie semi-cylindrique du membre inférieur du support de serrage et le membre supérieur est ensuite déplacé angulairement pour fermer le support de montage en faisant coïncider les deux parties semi-cylindriques.

### Technique antérieure.

Il est connu, notamment de la publication de la demande de brevet européen EP 0 638 756 A1, un support de montage comprenant un corps de serrage muni d'un logement de serrage d'au moins un tube. Le support se compose de deux coques d'une seule pièce, par exemple en matière plastique, reliées entre elles par un pli articulé. Ce pli articulé est formé par un amincissement du plastique dans la zone de pliage. Lors de l'utilisation, le support de montage, ou collier de serrage, sert à serrer le tube, par exemple un tuyau provenant d'un circuit de carburant, dans la zone de serrage du tube formée par le déplacement angulaire des deux coques articulées en vis-à-vis l'une de l'autre.

Ce support de serrage a l'avantage d'être très simple puisqu'il se compose d'une seule pièce. Toutefois, ce support de serrage est soumis à des contraintes répétées au niveau du joint de pliage en cours d'utilisation lors de l'ouverture et de la fermeture du support de serrage, ce qui peut éventuellement affaiblir le joint de pliage et entraîner son usure voire même sa rupture partielle ou totale.

En particulier, l'invention vise donc à fournir un support de serrage qui ne présente pas les inconvénients susmentionnés du document d'antériorité. L'invention est destinée à fournir un support de serrage avec une charnière de conception robuste, tout en assurant un serrage optimal du (des) tuyau (s).

### Résumé de l'invention

A cette fin, l'invention a notamment pour objet un support de serrage pour au moins un article tubulaire comprenant des membres séparables inférieur et supérieur qui sont conformés de façon complémentaire pour définir au moins un logement de serrage cylindrique adapté pour recevoir l'article tubulaire, et une charnière reliant de manière pivotante les membres inférieur et supérieur pour permettre un mouvement rotatif relatif entre une position ouverte dans laquelle les membres inférieur et supérieur s'étendent de manière coaxiale sensiblement dans une configuration bout-à-bout et une position fermée dans laquelle le membre supérieur est déplacé de manière rotative par rapport au membre inférieur hors de la configuration bout-à-bout, **caractérisé en ce que** les membres inférieur et supérieur comprennent respectivement des parties d'articulation inférieure et supérieure, munies chacune d'un siège définissant un espace de réception sensiblement semi-cylindrique **et en ce que** ces parties d'articulation inférieure et supérieure forment respectivement des éléments d'articulation inférieure et supérieure de la charnière, afin de former un ensemble pivotant rotatif avec l'article tubulaire dans la position de montage du support de serrage dans laquelle les deux membres séparables sont articulés en rotation autour de l'articule tubulaire qui agit comme un axe de pivot de la charnière.

La configuration proposée ici présente un certain nombre d'avantages. Comme les deux membres sont reliés entre eux par une charnière qui est formée par des parties de serrage spécifiques autour de l'article tubulaire, la charnière est particulièrement robuste. Les éléments de la charnière ne se détériorent pas avec le temps en raison de contraintes répétées.

De plus, cette disposition est particulièrement avantageuse pour faciliter le positionnement de l'article tubulaire dans son logement cylindrique tout en assurant une importante force de serrage. De préférence, les deux ou au moins l'un des membres en plastique sont clipsés sur le premier article tubulaire. La conception est telle que l'article tubulaire à la fois forme la charnière et maintient les deux membres en place.

Le deuxième membre peut ensuite être facilement fermé autour d'un deuxième article tubulaire avant de fixer l'ensemble par exemple avec un boulon central maintenant les supports fermement fermés et fixés à un châssis ou un bloc moteur.

De préférence, un ou les deux membres peuvent avoir un limiteur de compression métallique pour recevoir un élément de fixation tel qu'un boulon. Le limiteur de compression métallique peut avoir par exemple une forme cylindrique ou ovale. Ce limiteur de compression permet d'éviter les fortes contraintes ou la compression dans le support plastique lors de la fixation par boulon central sur un châssis ou un bloc moteur. Ceci permet de serrer fermement l'élément de fixation sans comprimer excessivement les membres en plastique.

Selon une autre caractéristique optionnelle de l'invention, les deux parties d'articulation sont agencées de manière à être reliées entre elles par un engagement mutuel permettant une rotation autour d'un axe de pivot virtuel.

Conformément à une autre caractéristique optionnelle de l'invention, le siège de l'une des parties d'articulation est formé par une languette de charnière courbée et le siège de l'autre des parties d'articulation est formé par au moins deux branches courbées en forme de fourche, la languette de charnière étant configurée pour s'engager entre les deux branches.

Conformément à une autre caractéristique optionnelle de l'invention, la languette de charnière et chacune des branches ont une section transversale de forme générale en "C", la languette de charnière étant insérée entre les deux branches de sorte que les "C" coïncident sensiblement selon la même direction axiale dans la disposition de bout en bout.

Conformément à une autre caractéristique optionnelle de l'invention, les deux membres ont une forme de coupe transversale identique et sont disposés, dans la position fermée, face à face.

Selon une autre caractéristique optionnelle de l'invention, le siège de chaque partie d'articulation est formé par des branches courbées en forme de fourche, les branches de la fourche inférieure sont disposées en alternance par rapport aux branches de la fourche supérieure.

Selon une autre caractéristique optionnelle de l'invention, les membres inférieur et supérieur comprennent des parties inférieure et supérieure de fixation munies respectivement de surfaces inférieure et supérieure en position fermée.

Conformément à une autre caractéristique optionnelle de l'invention, les parties inférieure et supérieure de fixation sont chacune pourvues de surfaces d'appui qui sont profilées de manière complémentaire et constituent des surfaces de verrouillage empêchant une rotation mutuelle entre les membres en position fermée.

Conformément à une autre caractéristique optionnelle de l'invention, chacune des parties de fixation comporte un trou pour un élément de fixation, comme par exemple une vis pour serrer les éléments autour de l'article tubulaire.

Conformément à une autre caractéristique optionnelle de l'invention, la partie de fixation s'étend entre deux boîtiers cylindriques pour recevoir deux tubes.

Conformément à une autre caractéristique optionnelle de l'invention, les membres inférieur et supérieur comprennent respectivement des parties de réception inférieure et supérieure munies chacune d'un autre siège définissant un espace de réception essentiellement semi-cylindrique pour recevoir un autre article tubulaire.

Conformément à une autre caractéristique optionnelle de l'invention, les membres sont en matière plastique.

Conformément à une autre caractéristique optionnelle de l'invention, les deux parties d'articulation sont élastiquement déformables pour être montées sur l'article tubulaire par clipsage.

Conformément à une autre caractéristique facultative de l'invention, le support comprend au moins un pont cassable porté par l'un des éléments et faisant saillie vers l'autre des éléments afin de fixer temporairement le support en position ouverte. Par exemple, le pont cassable est frangible.

Un autre objet de l'invention concerne un ensemble comprenant un support de serrage et au moins un article tubulaire, ledit support de serrage étant conforme à l'invention, chacune desdites parties d'articulation étant adaptées pour se clipser autour de l'article tubulaire.

Un autre objet de l'invention est de proposer un procédé d'assemblage d'un support de serrage et d'un article tubulaire d'un ensemble selon l'invention, comprenant les étapes suivantes de fixer l'article dans la partie articulée inférieure du support, clipser la partie articulée supérieure du support autour de l'article de manière à ce que les membres supérieur et inférieur soient disposés de bout-en-bout, déplacer en rotation le membre supérieur autour de l'article tubulaire pour fermer le support de serrage.

### Brève description des dessins

D'autres caractéristiques et avantages de l'invention apparaîtront à la lumière de la description qui suit, faite en référence aux dessins annexes dans lesquels :
**Fig.1**

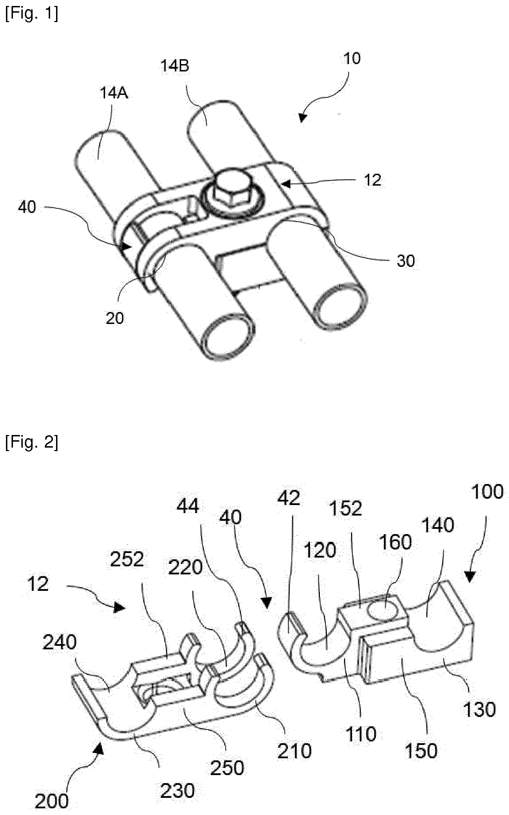

   [fig.1] représente une vue en perspective d'un ensemble selon un premier aspect de la présente invention;
**Fig.2**
   [fig.2] est représente une vue en perspective des membres séparables inférieur et supérieur de l'ensemble de la figure 1 ;
**Fig.3**

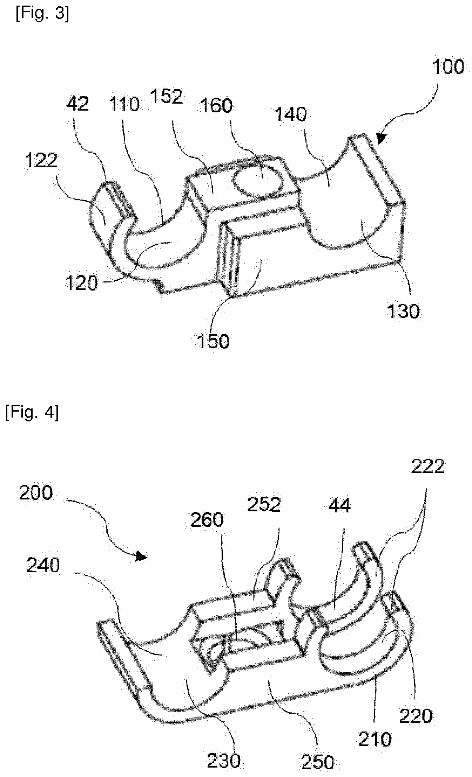

   [fig.3] représente une vue détaillée des membres séparables inférieur et supérieur de la figure 2 ;
**Fig.4**
   [fig.4] représente une vue détaillée des membres séparables inférieur et supérieur de la figure 2 ;
**Fig.5**

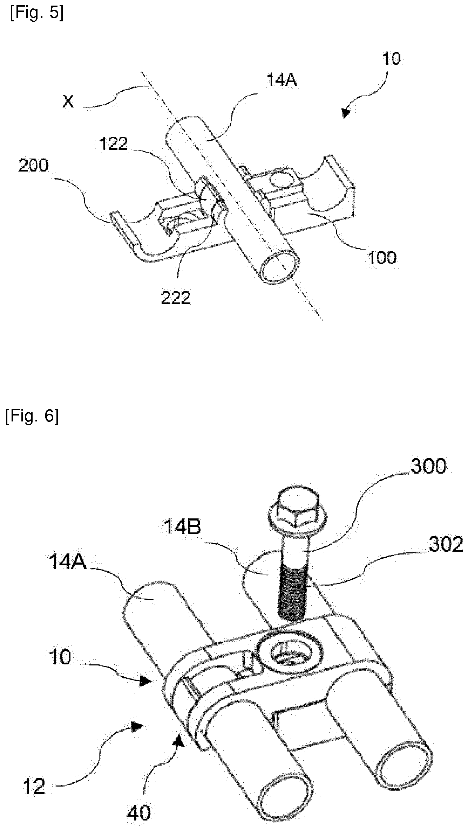

   [fig.5] représente les étapes du procédé d'assemblage de l'ensemble illustré par la figure 1 ;
**Fig.6**
   [fig.6] représente les étapes du procédé d'assemblage de l'ensemble illustré par la figure 1 ;
**Fig.7**

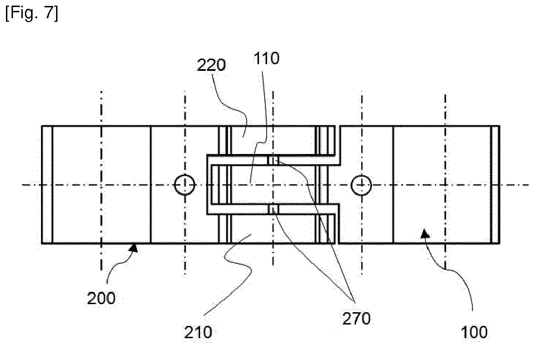

   [fig.7] représente une vue de dessus d'un ensemble selon un autre mode de réalisation de l'invention.

### Description des modes de réalisation

La figure 1 représente un ensemble selon un premier mode de réalisation de l'invention et désigné par la référence générale 10. En ce qui concerne la figure 1, l'ensemble 10 comprend un support de serrage 12. Le support de serrage 12 est par exemple un support ou collier de serrage 12 qui retient au moins un article tubulaire, tel que par exemple une conduite de carburant ou de frein dans un véhicule automobile. Dans cet exemple, le collier de serrage 12 est destiné à recevoir au moins une conduite de refroidissement d'un véhicule automobile.

En ce qui concerne la figure 2, le support de serrage 12 comprend des membres inférieur 100 et supérieur 200. Dans ce cas particulier, les membres 100, 200 peuvent être séparés l'un de l'autre. Selon l'invention, les membres inférieur 100 et supérieur 200 sont conformés de façon complémentaire pour délimiter ensemble au moins une zone de serrage cylindrique ou logement 20 pour au moins un article tubulaire 14A. Dans cet exemple, les membres inférieur 100 et supérieur 200 enserrent entre eux deux tubes 14A, 14B et délimitent ensemble deux zones de serrage cylindriques ou logements 20 et 30 pour chacun des deux tubes 14A, 14B (figure 1).

Comme illustré en détail dans la figure 2, le membre inférieur 100 comprend une partie articulée inférieure 110 comprenant un siège inférieur 120 définissant un espace de réception sensiblement semi-cylindrique. Le membre supérieur 200 comprend également une partie articulée supérieure 210 comprenant un siège supérieur 220 définissant un espace de réception sensiblement semi-cylindrique. Ces sièges partiellement cylindriques 120 et 220 sont de forme complémentaire pour former un logement de serrage cylindrique 20 adapté pour recevoir le tube 14A.

Dans la présente description, le membre inférieur 100 et le membre supérieur 200 comprennent encore respectivement des parties de réception inférieure 130 et supérieure 230 respectivement pourvues de sièges inférieur 140 et supérieur 240 définissant ensemble un autre logement 30 pour recevoir l'autre article tubulaire 14B.

Selon l'invention, le support de serrage 12 comprend également une charnière 40 reliant de manière pivotante les membres inférieur 100 et supérieur 200 pour autoriser un mouvement rotatif relatif entre une position ouverte dans laquelle les membres inférieur 100 et supérieur 200 s'étendent de manière coaxiale sensiblement en configuration bout-en-bout (figure 5) et une position fermée dans laquelle le membre supérieur 200 est déplacé de manière rotative par rapport au membre inférieur 100 hors de la configuration bout-en-bout (figure 6).

Plus précisément, les parties d'articulation inférieure 110 et supérieure 210 forment respectivement des éléments séparables d'articulation inférieure 42 et supérieure 44 de la charnière 40, formant ainsi un ensemble pivotant rotatif avec l'article tubulaire 14A en position de montage du support de serrage 12. Dans cette position, les deux membres séparables 100 et 200 sont articulés en rotation autour de l'article tubulaire 14A qui agit comme axe de pivotement de la charnière 40.

Comme illustré à la figure 5, les deux membres 100, 200 peuvent se déplacer l'un par rapport à l'autre entre une position ouverte pour insérer au moins un tube 14A dans le siège cylindrique partiel 120 de la partie articulée inférieure 110 et une position fermée pour maintenir le tube 14A dans le logement cylindrique 20.

Avantageusement, les deux parties articulées 110, 210 sont disposées de manière à être reliées de façon détachable par engagement mutuel, tout en permettant une rotation relative autour d'un axe X de pivot virtuel.

Dans ce cas particulier, le siège 120 de la partie articulée inférieure 110 est formée d'une languette de charnière courbe 122 et le siège 220 de la partie articulée supérieure 210 est formée d'au moins deux branches courbées en forme de fourche 222. La languette de charnière 122 est configurée pour s'engager entre les deux branches 222.

Comme le montre la figure 5, la languette de charnière 122 est par exemple disposée pour être reçue par friction à l'intérieur de ladite fourche de charnière 222. En fonctionnement, les deux membres 100, 200 sont reliés l'un à l'autre dans une relation d'engagement mutuel lorsque la languette de charnière 122 et la fourche de charnière 222 sont engagées l'une dans l'autre.

De préférence, la languette de charnière 122 et chacune des branches 222 ont une section transversale de forme générale "C" ou plus généralement une forme de segment de cercle. En fonctionnement, la languette de charnière 122 est insérée entre les deux branches 222 de sorte que les "C" coïncident sensiblement selon le même sens axial X dans la disposition de bout en bout (figure 5).

Avantageusement, ces deux parties articulées 110, 210 sont élastiquement déformables pour être montées par clipsage sur l'article tubulaire 14A. Chacune desdites parties articulées 110, 210 est ainsi adaptée pour s'attacher autour de l'article tubulaire 14.

Dans l'exemple, les membres inférieur 100 et supérieur 200 comprennent respectivement des parties de fixation inférieure 150 et supérieure 250 chacune étant munie respectivement de surfaces inférieure 152 et supérieure 252 d'appui mutuel, les surfaces 152, 252 étant disposées de telle sorte qu'elles s'appuient l'une contre l'autre lorsque le support 12 est dans la configuration fermée.

De préférence, les parties de fixation 150, 250 sont chacune pourvues de surfaces d'appui 152, 252 qui sont profilées de manière complémentaire et constituent des surfaces de verrouillage empêchant la rotation mutuelle entre les membres 100, 200 dans la configuration fermée du support 12. Cela empêche de préférence également les mouvements axiaux le long de l'axe X, ce qui maintient les membres inférieur 100 et supérieur 200 solidement imbriqués.

Préférentiellement, comme illustré dans les figures 3, 4 et 6, les parties de fixation 150, 250 délimitent ensemble un trou 160, 260 traversant chacune des parties de fixation 150, 250, pour recevoir un élément de fixation 300 tel qu'une vis pour serrer les membres 100, 200 ensemble autour de l'article tubulaire 14A. L'élément de fixation 300 est dans cet exemple une vis comportant une partie filetée 302, la partie filetée 302 pouvant soit venir coopérer avec une partie filetée interne au trou 160, 260 soit venir coopérer avec une partie filetée extérieure au support de serrage, par exemple une partie filetée d'une structure de support externe, tel qu'un châssis ou un bloc moteur.

De préférence, les membres 100, 200 sont réalisés dans une matière plastique. Par exemple, les membres 100, 200 sont réalisés par une opération de surmoulage. Cette opération de « surmoulage » qui consiste à placer dans un moule d'injection un premier membre réalisé antérieurement dans un autre moule d'injection puis à injecter de la matière plastique pour former un deuxième membre autour du premier membre. Ceci permet de former une liaison des deux membres détachable, puisque le premier membre réalisé dans une phase d'injection antérieure est déjà durci lorsque l'on pratique la phase suivante d'injection de matière plastique du deuxième membre. Un tel procédé de surmoulage est déjà connu par exemple pour la réalisation de chaînes en plastique ou de certaines figurines de jouet articulées telles que par exemple les figurines de jouet de la marque commercial Playmobil.

Les deux parties articulées 110, 210 sont par exemple élastiquement déformables pour être montées sur l'article tubulaire 14A par clipsage.

De préférence, au moins un des membres 100, 200 comprend un limiteur de compression métallique pour recevoir l'élément de fixation 300. Le limiteur de compression comprend par exemple un manchon de forme générale cylindrique ou ovale. Cela empêche le boulon central ou la vis 300 d'écraser le plastique ou de provoquer une usure du plastique dans le temps.

Dans l'exemple illustré, les deux parties de fixation 150, 250 sont complémentaires l'une de l'autre et peuvent comprendre par exemple des moyens de clipsage pour maintenir en position les deux membres l'un par rapport à l'autre autour de l'article tubulaire avant de rapporter l'ensemble sur un support externe, par exemple au moyen de l'élément de fixation 300.

En variante, les deux parties de fixation 150, 250 se complètent pleinement l'une à l'autre pour permettre aux deux membres 100, 200 d'être fixés par la partie filetée 302 de la vis 300 dans une partie filetée du trou 160, 260 et ainsi aux membres 100, 200 d'être maintenus ensemble uniquement par une vis.

Comme illustré, la partie de fixation 150, 250 s'étend entre les deux logements cylindriques 20, 30 pour recevoir les deux tubes 14A, 14B.

Comme variante non illustrée à l'invention, le support 12 comprend deux membres 100, 200 qui ont une forme de coupe transversale identique. Les membres 100, 200 peuvent ainsi être fabriqués avantageusement avec un seul outil de moulage, par exemple par injection plastique.

Dans cette variante, les membres 100, 200 sont dans une disposition tête-bêche dans la configuration assemblée du support. De préférence, les deux membres 100, 200 forment à l'intérieur une paire de passages cylindriques disposés à espacement mutuel pour loger les articles tubulaires et entre les passages, chaque membre 100, 200 comprend un trou le traversant pour recevoir un élément de fixation tel qu'une vis pour serrer les membres 100, 200 ensemble autour des tubes.

Par exemple, chaque élément 100, 200 a des parties de surfaces profilées, conçues comme partie de fixation, qui se complètent mutuellement de sorte qu'elles s'appuient les unes contre les autres dans la configuration fermée du support. Plus précisément, une portion de surface centrale de la portion de fixation de surface constitue une surface de verrouillage qui empêche la rotation mutuelle entre les membres dans la configuration fermée du support 12. Dans cette alternative, le siège de chaque partie articulée 110, 210 est formé par des branches courbées en forme de fourche, les branches de la fourche inférieure sont disposées par exemple dans un agencement alternant par rapport aux branches de la fourche supérieure.

Dans une autre réalisation de l'invention non illustrée, chacune des deux parties d'articulation inférieure et supérieure comprend une surface de d'appui latérale, les surfaces d'appui latérales étant agencées pour former ensemble une zone de butée mutuelle en position ouverte par déplacement axial des deux surfaces d'appui latérales l'une vers l'autre sans aucun engagement mutuel. Dans la configuration ouverte du support, les deux membres 100, 200 sont disposés l'un à côté de l'autre mais ne sont pas assemblés. Les deux membres ne sont reliés entre eux que par les deux parties de fixation dans la configuration fermée du support. De préférence dans ce mode de réalisation, les deux membres ont une forme de coupe transversale identique. Les deux parties d'articulation ont chacune une section transversale en forme de "C" de sorte que les "C" coïncident sensiblement selon la même direction axiale dans la disposition de bout en bout et où les deux membres sont disposés en relation tête-bêche dans la configuration fermée du support.

Dans un autre mode de réalisation de l'invention illustrée dans la figure 7, le support 12 comprend des moyens de positionnement 270 qui sont cassables. Par exemple, comme l'illustre la figure 7, le moyen de positionnement 270 comprend au moins une oreille ou un pont, porté par l'un des éléments 110, 210, et faisant saillie vers l'autre des éléments 210, 110. Comme on peut le voir sur la figure 7, les deux éléments 110, 210 sont maintenus solidement en position ouverte à l'aide des pattes cassables 270. Après rupture dudit moyen de positionnement 270, les deux éléments 110, 210 sont libres de passer de la position ouverte à la position fermée.

Une réalisation préférée du procédé d'assemblage selon l'invention sera maintenant décrite en référence aux figures. La figure 2 montre en perspective le support de serrage et cette figure sert de point de départ au procédé d'assemblage.

Dans un premier temps, les deux membres 100, 200 du support sont démontés et complètement indépendants les uns des autres, comme illustré à la figure 2.

Lors de la première étape, les deux membres 100, 200 sont positionnés en configuration bout-en-bout de telle sorte que les sièges semi-cylindriques 120, 220 des parties articulées inférieure 110 et supérieure 210 coïncident selon l'axe X pour permettre le positionnement du premier tube 14A. Les deux membres 100, 200 sont mis en prise par engagement de la languette de charnière 122 de la partie articulée inférieure 110 dans la fourche de charnière 222 de la partie articulée supérieure 210.

Dans la deuxième étape, les deux parties articulées inférieure 110 et supérieure 210 sont fixées autour du premier tube 14A. Le positionnement du premier tube 14A consiste dans cet exemple à clipser le tube 14A dans les deux sièges semi-cylindriques 120, 220 des membres 100, 200. Le positionnement du deuxième tube 14B consiste à insérer le tube 14B dans le siège de réception semi-cylindrique 140 ou peut également consister à clipser le tube 14B à l'intérieur du siège 140. Dans une troisième étape, le membre supérieur 200 est déplacé en rotation autour du tube 14A pour fermer le collier de serrage 12.

Dans une dernière étape, un élément de fixation, tel qu'un boulon 300 est inséré par le haut dans le trou 160, 260 traversant les deux membres 100, 200 et l'extrémité du boulon est par exemple ensuite vissée dans un support externe tel qu'un châssis ou un bloc moteur ou en variante vissée dans le trou 160, 260 pour relier la paire de membres 100, 200 ensemble.

Ainsi, il a été montré et décrit un nouveau support de serrage pour la fixation par encliquetage des tubes. De nombreux changements, modifications, variations et autres utilisations et applications de l'invention en question deviendront toutefois évidents pour l'homme du métier après avoir considéré cette demande de brevet et les dessins qui l'accompagnent, lesquels révèlent un mode de réalisation préféré de celle-ci.

Tous les changements, modifications, variations et autres utilisations et applications qui ne s'écartent pas des enseignements de la présente description sont réputés couverts par le présent brevet, qui est limité uniquement par les revendications qui suivent telles qu'interprétées à la lumière de la description qui précède. Dans l'exemple décrit, les articles tubulaires prennent la forme de conduites de combustible, mais l'invention peut être appliquée avantageusement à tous les types de conduites, par exemple à d'autres types de conduites, ainsi qu'aux lignes électriques ou à une combinaison de différents types de conduites. L'exemple décrit se réfère à deux tuyaux, mais l'invention peut également être appliquée lorsqu'un nombre différent de lignes doivent être fixées.

## Revendications

1. Support de serrage (12) pour au moins un article tubulaire (14A, 14B) comprenant :
- Des membres séparables inférieur (100) et supérieur (200) qui sont conformés de façon complémentaire pour définir au moins un logement de serrage cylindrique (20, 30) pour recevoir l'article tubulaire (14A, 14B), et
- Une charnière (40) reliant de manière pivotante les membres inférieur (100) supérieur (200) pour permettre un mouvement rotatif relatif entre une position ouverte dans laquelle les membres inférieur (100) et supérieur (200) s'étendent de manière coaxiale sensiblement dans une configuration bout-à-bout et une position fermée dans laquelle le membre supérieur (200) est déplacé de manière rotative par rapport au membre inférieur (100) hors de la configuration bout-à-bout,
**caractérisé en ce que** les membres inférieur (100) et supérieur (200) comprennent respectivement des parties d'articulation inférieure (110) et supérieure (210), munies chacune d'un siège (120,220) définissant un espace de réception sensiblement semi-cylindrique **et en ce que** ces parties d'articulation inférieure (110) et supérieure (210) forment respectivement des éléments d'articulation inférieure (42) et supérieure (44) de la charnière (40), afin de former, avec l'article tubulaire (14A), un ensemble pivotant rotatif dans la position de montage du support de serrage dans laquelle les deux membres séparables (100, 200) sont articulés en rotation autour de l'article tubulaire (14A) qui agit comme un axe de pivot de la charnière (40).

2. Support de serrage (12) selon la revendication précédente, dans lequel les deux parties d'articulation (110, 210) sont agencées pour être assemblées par engagement mutuel autorisant une rotation autour d'un axe de pivot virtuel (X).

3. Support de serrage (12) selon l'une quelconque des revendications précédentes, **caractérisé en ce que** le siège (120, 220) d'une des parties d'articulation (110, 210) est formé par une languette de charnière courbe (122) et le siège (220, 120) de l'autre des parties d'articulation (210, 110) est formé par au moins deux branches courbées en forme de fourche (222), la languette de charnière (122) étant configurée pour s'engager entre les deux branches (222).

4. Support de serrage (12) selon la revendication précédente, dans lequel la languette de charnière (122) et chacune des branches (222) ont une section transversale ayant une forme générale de "C", la patte de charnière (122) étant insérée entre les deux branches (222) de sorte que les "C" coïncident sensiblement selon la même direction axiale (X) dans la configuration de bout-en-bout.

5. Support de serrage (12) selon la revendication 1 ou 2, **caractérisé en ce que** les deux membres (100, 200) ont une forme de section transversale identique et sont dans une disposition tête-bêche dans la position fermée.

6. Support de serrage (12) selon la revendication précédente, dans lequel le siège de chaque partie d'articulation (110, 210) est formé par des branches courbées en forme de fourche, les branches de la fourche inférieure étant disposées selon un agencement alternant par rapport aux branches de la fourche supérieure.

7. Support de serrage (12) selon l'une quelconque des revendications précédentes, **caractérisé en ce que** les membres inférieur et supérieur (100, 200) comprennent des parties de fixation inférieure et supérieure (150, 250) pourvues de surfaces d'appui mutuellement supérieure et inférieure (152, 252) en position fermée.

8. Support de serrage (12) selon la revendication précédente, dans lequel les parties de fixation inférieure et supérieure (150, 250) sont chacune pourvues de surfaces d'appui (152, 252) qui sont profilées de manière complémentaire et constituent des surfaces de verrouillage empêchant une rotation mutuelle et/ou un mouvement axial entre les membres (100, 200) en position fermée.

9. Support de serrage (12) selon l'une ou l'autre des revendications 7 ou 8, dans lequel chacune des parties de fixation (150, 250) comprend un trou traversant pour recevoir un élément de fixation (300) tel qu'une vis pour serrer les membres (100, 200) ensemble autour de l'article tubulaire (14A, 14B).

10. Support de serrage (12) selon l'une quelconque des revendications 7 à 9, dans lequel les parties de fixation (150, 250) s'étendent entre deux logements cylindriques de réception respectivement d'au moins deux articles tubulaires (14A, 14B).

11. Support de serrage (12) selon l'une quelconque des revendications précédentes, dans lequel les membres inférieur et supérieur (100, 200) comprennent respectivement des parties de réception inférieure et supérieure (130, 230) munies chacune d'un autre siège (140, 240) définissant un espace de réception sensiblement semi-cylindrique pour recevoir un autre article tubulaire (14B).

12. Support de serrage (12) selon l'une quelconque des revendications précédentes, dans lequel les membres (100, 200) sont constitués essentiellement d'une matière plastique.

13. Support de serrage (12) selon la revendication précédente, dans lequel au moins un des membres (100, 200) comprend un limiteur de compression métallique destiné à recevoir un élément de fixation (300).

14. Support de serrage (12) selon l'une quelconque des revendications précédentes, dans lequel lesdites deux parties d'articulation (110, 210) sont élastiquement déformables pour être montées sur l'article tubulaire (14A) par clipsage.

15. Support de serrage (12) selon l'une quelconque des revendications précédentes, comprenant au moins un pont cassable (270) porté par l'une desdites parties d'articulation (110, 210) et faisant saillie vers l'autre des éléments (210, 110) afin de fixer temporairement le support (12) en position ouverte.

16. Assemblage (10) comprenant un support de serrage (12) et au moins un article tubulaire (14A, 14B), **caractérisé en ce que**, ledit support de serrage (12) étant conforme aux revendications 1 à 15, chacune desdites parties d'articulation (110,210) est adaptée pour être clipsée autour de l'article tubulaire (14A, 14B).

17. Procédé d'assemblage d'un support de serrage (12) et d'un article tubulaire (14A, 14B) d'un ensemble (10) selon la revendication précédente, comprenant les étapes suivantes de:
- positionner les membres supérieur et inférieur (100, 200) en configuration de bout-en-bout de telle sorte que les sièges semi-cylindriques (120, 220) des parties articulées inférieure (110) et supérieure (210) coïncident selon un axe (X),
- clipser l'article (14A, 14B) dans les parties articulées inférieure (110) et supérieure (210) du support (12),
- déplacer en rotation le membre supérieur (200) autour de l'article tubulaire (14A, 14B) pour fermer le support de serrage (12).
